# EUROPÄISCHE PATENTSCHRIFT

(11) **EP 1 828 646 B1**
(45) Veröffentlichungstag und Bekanntmachung des Hinweises auf die Patenterteilung: **31.12.2008**
(21) Anmeldenummer: 05808338.7
(22) Anmeldetag: 19.11.2005
(51) Int. Cl.: F16H 63/32, F16H 63/38

(54) **SCHALTGABEL**
SELECTOR FORK
FOURCHETTE DE COMMANDE

(30) Priorität: 24.12.2004 DE 102004062584
(43) Veröffentlichungstag der Anmeldung: 05.09.2007
(73) Patentinhaber: Schaeffler KG, 91074 Herzogenaurach (DE)
(72) Erfinder: PECTHL, Volker, 92224 Amberg (DE); KRÄMER, Klaus, 91460 Baudenbach (DE)
(86) Internationale Anmeldenummer: PCT/EP2005/012411
(87) Internationale Veröffentlichungsnummer: WO 2006/072280

(56) Entgegenhaltungen:
- EP-A- 1 072 826
- DE-A1- 10 219 356
- US-A- 1 378 222

## Beschreibung

### Gebiet der Erfindung

Die Erfindung betrifft eine Schaltgabel für ein Zahnräderwechselgetriebe, deren sich gegenüberliegende Gabelenden eine Schaltmuffe mit einer Nut umgreifen, wobei die Schaltgabel eine Nabe aufweist, welche auf einem Schaltglied fixiert ist.

### Hintergrund der Erfindung

In manuellen oder automatisierten Getrieben sind zwischen zwei Gangrädern, die drehbar auf einer Getriebewelle gelagert sind, ein Synchronkörper und eine Schaltmuffe angeordnet. Die Schaltmuffe ist mit einer Innenverzahnung versehen, die in eine in den Synchronkörper eingebrachte Außenverzahnung eingreift. Der Synchronkörper ist drehfest mit der Getriebewelle verbunden. Beim Schalten eines Gangs wird die Schaltmuffe in axialer Richtung auf eines der Gangräder verschoben, bis die Innenverzahnung in eine am Gangrad angebrachte Kupplungsverzahnung eingreift. Die Innenverzahnung der Schaltmuffe steht dann sowohl mit der Kupplungsverzahnung als auch mit der Außenverzahnung des Synchronkörpers in Eingriff. Die Schaltgabel hat die Aufgabe, eine axiale Bewegung von einem Schaltgestänge auf die Schaltmuffe zu übertragen. Dabei ist die Schaltgabel auf einem Schaltglied gelagert und greift mit Mitnehmern in eine als Nut ausgebildete Schaltmuffenführung der Schaltmuffe ein.

Zunehmend gewinnen aus Blech hergestellte Schaltgabeln an Bedeutung, da diese sich kostengünstig und materialsparend herstellen lassen. Der Schaltgabelgrundkörper ist zumeist ein durch Kaltumformen von Blech hergestelltes Formteil. Das Formteil ist gabelförmig mit zwei zueinander beabstandeten Gabelenden ausgeführt, wobei auf den Gabelenden häufig Gleitschuhe angeordnet sind. Die Schaltgabeln der betrachteten Gattung weisen eine Führung mit einem in der Regel zylindrisch ausgebildeten Führungsloch auf, welche auf einer Schaltschiene, Schaltstange oder auf einem ähnlichen Schaltglied sitzt und somit eine Schaltanordnung bilden.

Das Dokument DE 10219356 zeigt eine Schaltgabel mit allen Merkmalen des Oberbegriffs von Anspruch 1.

Es gibt Schaltgabeln, die längs- und zum Teil auch schwenkbeweglich auf den vorgenannten Schaltgliedern angeordnet sind. Weiterhin gibt es Schaltgabeln, die fest auf diesen Schaltgliedern sitzen und deshalb mit dem Schaltglied zusammen relativ zu und in einem Schaltgetriebe beweglich sind. Um die einzelnen Gänge sicher zu schalten, ist es erforderlich, dass die Schaltgabel sicher in vorbestimmten Verstellpositionen fixiert werden kann. Dazu schlägt beispielsweise die EP 0 559 652 vor, in ein das Getriebe umgebendes Getriebegehäuse ein Rastelement einzusetzen, das zumindest ein Gehäuse und eine Rastkugel aufweist, wobei die Rastkugel in eine Rastausnehmung eines Schaltelements eingreift, das mit der Schaltgabel in Wirkverbindung steht.

Führungen mit einem Festsitz auf einem der Schaltglieder, die als Naben ausgebildet sind, sind mit einem vollständig durch die Führung hindurch verlaufenden Loch in Form eines Durchgangsloches versehen. Das Führungsloch verläuft alternativ dazu nur teilweise und damit in der Form eines Sacklochs. Das Durchgangsloch fungiert als ein Gleitsitz auf dem Schaltglied. Alternativ nimmt das Durchgangsloch ein Gleitlager, beispielsweise in der Ausführung einer Gleitbuchse aus Kunststoff, oder ein Wälzlager, z. B. mit Kugeln oder Rollen, auf. Die Führungen liegen in beliebigen Ausführungsformen und Querschnitten, z. B. in der Form eines Hohlprofils mit rechteckigem Querschnitt bzw. eines Hohlprofils mit innen zylindrischem und außen mit beliebigem Querschnitt oder als hohlzylindrische Hülse, vor.

Bei aus Blech hergestellte Schaltgabeln kann ein hohes Biegemoment auftreten, da die Schaltmuffe und das die Schaltkräfte in die Schaltgabel einleitende Schaltglied einen relativ großen Wirkabstand haben. Diese Biegemomente führen bei erhöhten Schaltkräften und besonders bei Missbrauch zu hohen Kräften, die unerwünschte, dauerhafte Verformungen der Schaltgabel bewirken können. Um dieses Problem zu vermeiden, ist beispielsweise in der DE 199 44 323 A1 vorgeschlagen, an der Schaltgabel ein zusätzliches Formteil auszubilden, das als dritter Gleitschuh die Schaltgabel nur bei erhöhter Krafteinwirkung auf die Schaltgabel zusätzlich gegenüber der Schaltmuffe abstützt. Dadurch kann die Dimensionierung der Schaltgabel kleiner erfolgen, weil die Missbrauchskräfte von diesem Gleitschuh aufgenommen werden. Das Abfangen der Missbrauchskräfte ist an sich zufrieden stellend, jedoch erfordert sie das zusätzliche Einbringen eines Formteils und erhöht damit den Fertigungsaufwand. Der Bauraum einer derartigen Schaltanordnung ist dadurch nicht verringert.

### Zusammenfassung der Erfindung

Der Erfindung liegt daher die Aufgabe zugrunde, die geschilderten Nachteile zu vermeiden und somit eine einfach zu fertigende und bauraumoptimierte Schaltgabel in Leichtbauweise zu schaffen, die hohen Missbrauchskräften standhält.

Diese Aufgabe ist nach dem kennzeichnenden Teil des Anspruchs 1 dadurch gelöst, dass das Schaltglied mittels Rastausnehmungen im Bereich der Nabe für ein Rastelement mit einem Gehäuse aufweist, wobei das Gehäuse des Rastelements mit der Nut im Eingriff steht. Die Schaltgabel kann sich damit nicht nur über die Gabelenden, sondern zusätzlich über das Rastelement an der Schaltmuffe abstützen. Damit werden die auftretenden Spannungen, die zu dauerhaften Verformungen führen könnten, vermieden. Durch Verwendung des Rastelements als dritten Gleitschuh ist ein zusätzliches Formteil nicht erforderlich. Es ist kein zusätzliches Schaltelement erforderlich, was sich zudem positiv auf die Masse und den Aufwand für das Zusammenfügen der Einzelteile auswirkt. Außerdem geht durch die erfindungsgemäße Anordnung des Rastelements kein seitlicher Bauraum verloren.

Es ist besonders vorteilhaft, das Gehäuse des Rastelements komplementär zu der Nut auszubilden. Dadurch werden Kräfte, die aus verschiedenen Richtungen auf die Schaltgabel angreifen, optimal aufgenommen. Das Gehäuse kann eine quaderförmige Gestalt aufweisen, oder aber es umgreift die Nut.

Anspruch 3 beschreibt eine vorteilhafte Weiterbildung der erfindungsgemäßen Schaltgabel. Dadurch dass zwischen dem Gehäuse des Rastelements und der Nut ein Spalt verbleibt, erfolgt im Normalfall, wenn die Schaltung ordnungsgemäß bedient wird, das Abstützen nur über die Gabelenden. Die Gabelenden lassen sich mit Gleitschuhen versehen und somit auf den Dauereinsatz abstimmen. Das Gehäuse des Rastelements braucht nur im Fall des unsachgemäßen Gebrauchs oder bei anderweitig herrührender Überlast Kräfte aufnehmen. Dadurch muss es nicht besonders verstärkt sein. Der Spalt lässt sich auf die Schaltanordnung so abstimmen, dass einerseits nur Kräfte ab einer bestimmten Größe abgestützt werden und andererseits die Elastizität der Schaltgabel nicht überbeansprucht wird.

In einer anderen Weiterbildung ist das Rastelement in eine Aufnahme der Schaltgabel eingepresst. Das Rastelement ist dadurch kraftschlüssig mit der Schaltgabel verbunden und damit verliersicher handhabbar, was die Montage erleichtert. Das Rastelement kann damit in Bezug zur Schaltgabel nicht verkippen, was Biegemomentspitzen vermeidet.

In besonders einfacher Bauart besitzt das Rastelement die Form eines Zylinders und weist radial von der Schaltmuffe weg. Dabei besteht es zumindest aus einem Gehäuse, einem Federelement und einem Arretierglied, das meist als eine Rastkugel ausgebildet ist. Die Rastkugel fährt beim Schaltvorgang über die im Schaltglied ausgebildeten Rastausnehmungen, findet und fixiert die gewählte Raststellung.

### Kurze Beschreibung der Zeichnungen

Die Erfindung wird nachfolgend anhand eines Ausführungsbeispiels näher erläutert. Es zeigen:
- Figur 1: eine perspektivische Ansicht einer Schaltanordnung mit einer Schaltgabel nach dem Stand der Technik,
- Figur 2: einen Querschnitt einer erfindungsgemäßen Schaltgabel mit einer Schaltmuffe,
- Figur 3: eine perspektivische Ansicht der Schaltgabel nach Figur 2,
- Figur 4: einen Längsschnitt der erfindungsgemäßen Schaltgabel nach Figur 2,
- Figur 5: den mit V bezeichneten, vergrößerten Ausschnitt des Rastierelements aus Figur 2.

### Detaillierte Beschreibung der Zeichnungen

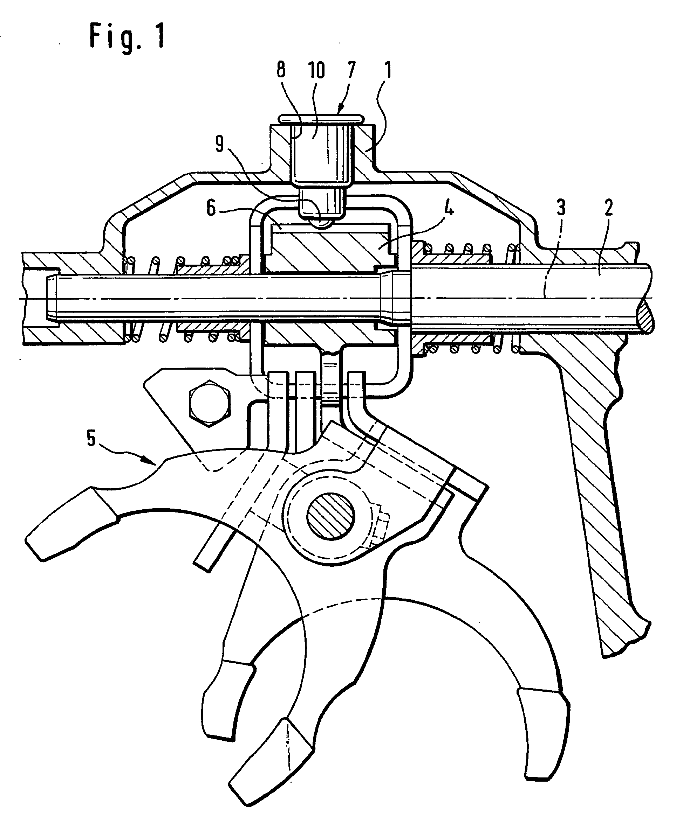

Figur 1 zeigt ein Getriebegehäuse 1 eines Schaltgetriebes, wobei in Lagern die Schaltstange 2 in Achsrichtung, das heißt längs der Achse 3 verschieblich und in Umfangsrichtung um die Achse 3 schwenkend bewegbar angeordnet ist. Die Schaltstange 2 besitzt ein oder mehrere Schaltelemente 4, welche in eine Schaltgabel 5 zur Bewegung derselben eingreifen. Um die einzelnen Stellungen der Schaltstange 2 zu sichern, ist diese oder das Schaltelement mit einer entsprechenden Rastausnehmung 6 versehen. Die Rastkugel 9 des Rastelements 7 greift in die Rastausnehmung 6 ein. Das Rastelement 7 ist ortsfest im Getriebegehäuse angeordnet. Hierzu ist es beispielsweise in eine Bohrung 8 des Getriebegehäuses mit seinem Gehäuse 10 eingepresst. Die Rastkugel 9 greift in die Rastausnehmung 6 des Schaltelements 4 ein, wenn eine übereinstimmende Lage gegeben ist. Bei Bewegung kann die Rastkugel 9 den Sitz in der Rastausnehmung durch Verschiebung gegen die Kraft eines Federelements 11 verändern.

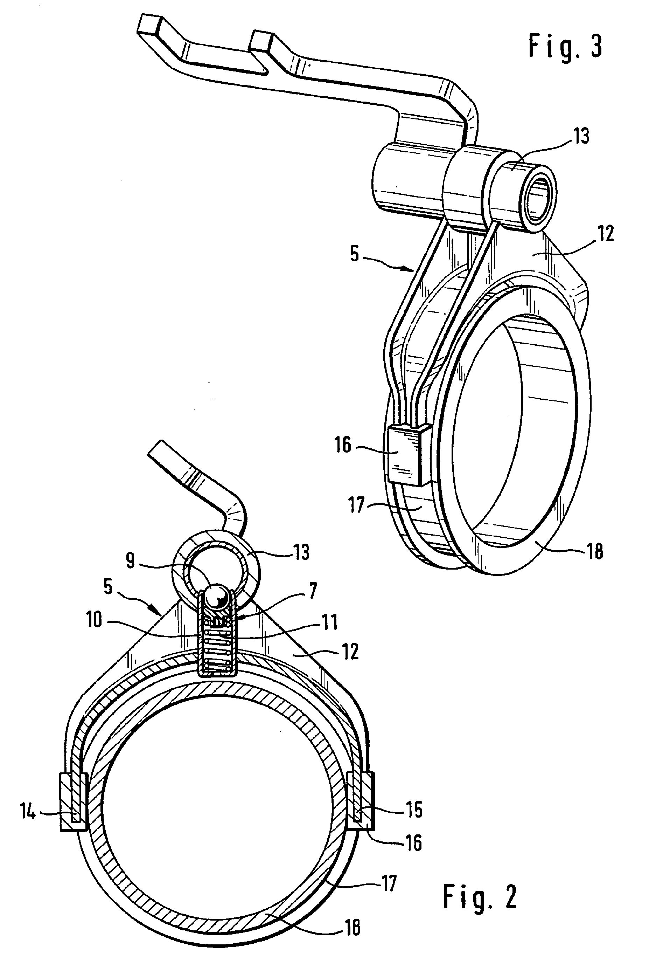

Die Figuren 2, 3 und 4 zeigen eine erfindungsgemäße Schaltgabel 5, die im Wesentlichen aus einem Schaltgabelgrundkörper 12 sowie einer Nabe 13 besteht. Die Schaltgabel 5 ist dabei aus Blech kaltumgeformt und kann zu ihrer Verstärkung Rippen aufweisen. Der Schaltgabelgrundkörper 12 ist gabelförmig mit zwei Gabelenden 14, 15 versehen, die von Gleitschuhen 16 umfasst werden. Über die Gleitschuhe 16 greift die Schaltgabel 5 in eine Nut 17 einer ringförmigen Schaltmuffe 18 ein. Die Gleitschuhe 16 sind dabei an die Form der Nut 17 angepasst. Auch das Rastelement 7 greift in die Nut 17 ein. Es orientiert sich längs einer Verbindungsachse, die die Achse 3 des Schaltglieds 2 und die Achse 19 der Schaltmuffe 18 orthogonal schneidet. Es ist dabei in eine Aufnahme 22 des Schaltgabelgrundkörpers 12 eingepresst und wird somit fixiert.

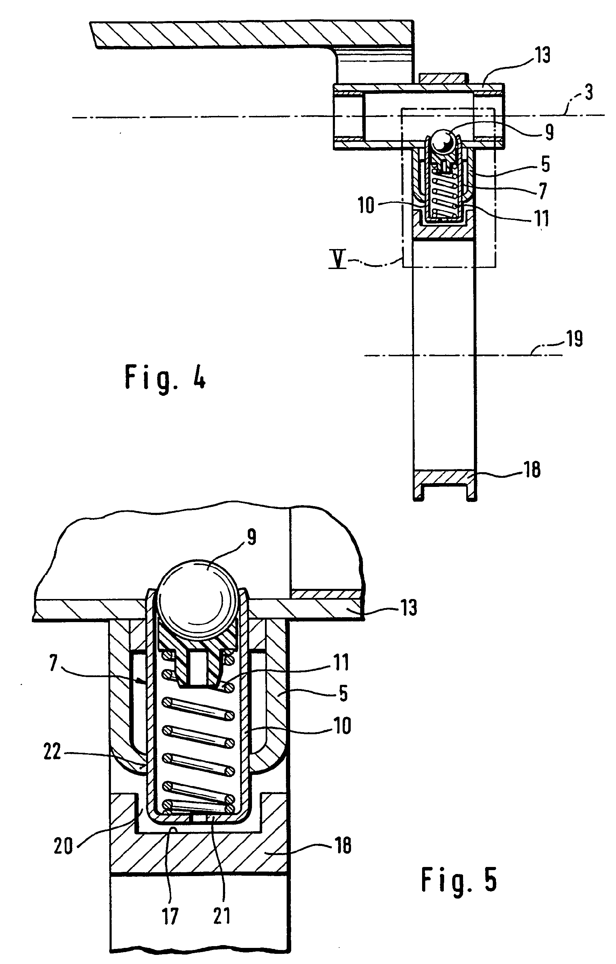

Figur 5 zeigt das Rastelement 7 mit seinem Gehäuse 10, welches im Wesentlichen die Form einer zylindrischen Säule besitzt, die aber nicht notwendigerweise kreiszylindrisch sein muss. Es ist an seiner Unterseite 21 zur Form der Nut 17 komplementär. In dem Gehäuse 10 ist ein Federelement 11 angeordnet, das eine Rastkugel 9 vorspannt. Die Rastkugel 9 kann dabei noch gesondert gelagert sein, um ein angenehmeres Schaltgefühl zu vermitteln. Sie wirkt mit den Rastausnehmungen 6 der hier nicht dargestellten Schaltstange zusammen.

Zwischen Rastelement 7 und der Schaltmuffe 18 ist im unbelasteten Zustand ein Spalt 20 ausgebildet. Der Spalt 20 verhindert, dass im Normalbetrieb das Bewegen der Schaltmuffe 18 auf Gangräder nicht über das Rastelement 7 erfolgt, sondern über die speziell dafür ausgebildeten Gabelenden 14, 15 mit den Gleitschuhen 16. Die Größe des Spalts 20 ist so gewählt, dass bei Überlast, insbesondere bei einer Fehlbedienung, die zum Verformen der Schaltgabel 5 führt, sich die Schaltgabel 5 zusätzlich über das Rastelement 7 auf der Schaltmuffe 18 abstützen kann. Sofern nicht konstruktive Besonderheiten zu beachten sind, ist die Spaltgröße so zu wählen, dass sie überall gleich groß ist.

### Bezugszeichen

- 1: Getriebegehäuse
- 2: Schaltstange
- 3: Achse
- 4: Schaltelement
- 5: Schaltgabel
- 6: Rastausnehmung
- 7: Rastelement
- 8: Bohrung
- 9: Rastkugel
- 10: Gehäuse
- 11: Federelement
- 12: Schaltgabelgrundkörper
- 13: Nabe
- 14: Gabelende
- 15: Gabelende
- 16: Gleitschuh
- 17: Nut
- 18: Schaltmuffe
- 19: Achse
- 20: Spalt
- 21: Unterseite
- 22: Aufnahme

## Patentansprüche

1. Schaltgabel (5) für ein Zahnräderwechselgetriebe, deren sich gegenüberliegende Gabelenden (14, 15) eine Schaltmuffe (18) mit einer Nut (17) umgreifen, wobei die Schaltgabel (5) eine Nabe (13) aufweist, welche auf einem Schaltglied (2) mittels Rastausnehmungen (6) im Bereich der Nabe fixiert ist, **dadurch gekennzeichnet, dass** die Schaltgabel (5) ein Rastelement (7) mit einem Gehäuse (10) aufweist, wobei das Gehäuse (10) des Rastelements (7) mit der Nut (17) im Eingriff steht.

2. Schaltgabel (5) nach Anspruch 1, **dadurch gekennzeichnet, dass** das Gehäuse (10) des Rastelements (7) komplementär zur Nut (17) ausgebildet ist.

3. Schaltgabel (5) nach Anspruch 1, **dadurch gekennzeichnet, dass** das Gehäuse (10) des Rastelements (7) im nicht belasteten Zustand am stirnseitigen Ende mit einem Spalt (20) von der Schaltmuffe (18) beabstandet ist.

4. Schaltgabel (5) nach Anspruch 1, **dadurch gekennzeichnet, dass** das Gehäuse (10) des Rastelements (7) in eine Aufnahme (22) der Schaltgabel (5) eingepresst ist.

5. Schaltgabel (5) nach Anspruch 4, **dadurch gekennzeichnet, dass** das Gehäuse (10) des Rastelements (7) zylindrisch ausgebildet und geometrisch mittig zwischen den Gabelenden (14, 15) radial von der Schaltmuffe (18) weg weist.

6. Schaltgabel (5) nach Anspruch 5, **dadurch gekennzeichnet, dass** im Gehäuse (10) des Rastelements (7) eine durch ein Federelement (11) vorgespannte Rastkugel (9) angeordnet ist.

## Claims

1. Gearshift fork (5) for a variable speed gear transmission, opposing fork ends (14, 15) of which gearshift fork (5) surround a gearshift sleeve (18) having a groove (17), said gearshift fork (5) comprising a hub (13) that is fixed on a gearshift member (2) by means of catch recesses (6) in the region of the hub (13), **characterised in that** the gearshift fork (5) comprises a detent element (7) that possesses a housing (10) and this housing (10) of the detent element (7) is in engagement with the groove (17).

2. Gearshift fork (5) according to claim 1, **characterised in that** the housing (10) of the detent element (7) has a shape complementary to the shape of the groove (17).

3. Gearshift fork (5) according to claim 1, **characterised in that**, in the non-loaded state, the housing (10) of the detent element (7) is spaced at the front end from the gearshift sleeve (18) by a gap (20).

4. Gearshift fork (5) according to claim 1, **characterised in that** the housing (10) of the detent element (7) is pressed into a reception (22) of the gearshift fork (5)

5. Gearshift fork (5) according to claim 4, **characterised in that** the housing (10) of the detent element (7) has a cylindrical configuration and points radially away from the gearshift sleeve (18) in a geometrically central position between the fork ends (14, 15).

6. Gearshift fork (5) according to claim 5, **characterised in that** a detent ball (9) biased by a spring element (11) is arranged in the housing (10) of the detent element (7).

## Revendications

1. Fourchette (5) changement de vitesse pour une transmission par engrenages, des extrémités (14, 15) opposés de cette fourchette (5) de changement de vitesse entourant un manchon (18) de changement de vitesse qui comprend une rainure (17), ladite fourchette (5) de changement de vitesse comprenant un moyeu (13) qui est fixé à un membre (2) de changement de vitesse au moyen des évidements (6) d'arrêt dans la région du moyeu (13), **caractérisée en ce que** la fourchette (5) de changement de vitesse comprend un élément (7) d'arrêt qui possède un boîtier (10) et que ce boîtier (10) de l'élément (7) d'arrêt est en prise avec la rainure (17).

2. Fourchette (5) de changement de vitesse selon la revendication 1, **caractérisée en ce que** le boîtier (10) de l'élément (7) d'arrêt a une configuration qui est complémentaire à celle de la rainure (17).

3. Fourchette (5) de changement de vitesse selon la revendication 1, **caractérisée en ce que**, à l'étant non sollicité, le boîtier (10) de l'élément (7) d'arrêt est écarté du manchon (18) de changement de vitesse au côté frontal par un intervalle (20).

4. Fourchette (5) de changement de vitesse selon la revendication 1, **caractérisée en ce que** le boîtier (10) de l'élément (7) d'arrêt est pressé dans une réception (22) de la fourchette (5) de changement de vitesse.

5. Fourchette (5) de changement de vitesse selon la revendication 4, **caractérisée en ce que** le boîtier (10) de l'élément (7) d'arrêt a une configuration cylindrique et est orienté radialement à l'opposé du manchon (18) de changement de vitesse en étant situé géométriquement dans une position centrale entre les extrémités (14, 15) de fourchette.

6. Fourchette (5) de changement de vitesse selon la revendication 5, **caractérisée en ce que** dans le boîtier (10) de l'élément (7) d'arrêt est agencée une bille (9) d'arrêt qui est précontrainte par un élément (11) ressort.
